# EUROPÄISCHE PATENTSCHRIFT

(11) **EP 2 195 544 B1**
(45) Veröffentlichungstag und Bekanntmachung des Hinweises auf die Patenterteilung: **18.05.2011**
(21) Anmeldenummer: 08807842.3
(22) Anmeldetag: 29.09.2008
(51) Int. Cl.: F16B 31/02, F16L 17/04, F16L 21/06

(54) **VORRICHTUNG ZUM ERZEUGEN VON DRUCKKRÄFTEN AUF MITEINANDER ZU VERBINDENDE, ROHRFÖRMIGE BAUTEILE**
DEVICE FOR GENERATING PRESSURE FORCES ON TUBULAR COMPONENTS TO BE CONNECTED TO ONE ANOTHER
DISPOSITIF POUR GENERER DES FORCES DE COMPRESSION SUR DES PIECES TUBULAIRES A RACCORDER LES UNES AUX AUTRES

(30) Priorität: 01.10.2007 CH 15362007
(43) Veröffentlichungstag der Anmeldung: 16.06.2010
(73) Patentinhaber: Straub Werke AG, 7323 Wangs (CH)
(72) Erfinder: SCHLEGEL, Andreas, CH-8135 Langnau Am Albis (CH); KELLER, Beat, CH-8046 Zürich (CH); FRIEDL, Markus, CH-8001 Zürich (CH); HAURI, Philip, CH-8006 Zürich (CH)
(74) Vertreter: Rosenich, Paul
(86) Internationale Anmeldenummer: PCT/IB2008/053956
(87) Internationale Veröffentlichungsnummer: WO 2009/044328

(56) Entgegenhaltungen:
- EP-A- 1 077 342
- WO-A-02/086370
- US-B1- 6 202 981

## Beschreibung

Die Erfindung betrifft eine Vorrichtung zum Erzeugen von Druckkräften auf miteinander zu verbindende, rohrförmige Bauteile, mit einem Gehäuse, einer mechanisch betätigbaren Spanneinrichtung, einer im Gehäuse angeordneten, gummielastisch verformbaren Masse, welche durch die Spanneinrichtung unter Druck setzbar ist und einem mechanischen Indikator, der den Spannungszustand der Masse nach aussen hin optisch anzeigt, mit einem mit der Masse in Kontakt stehenden Fühler und einem Sensor, wobei der Indikator ein separates Anzeigeelement aufweist.

Vorrichtungen zum Erzeugen von Druckkräften erfordern meistens das Erreichen eines vorbestimmten Spannungszustandes in der gummiartig elastisch verformbaren Masse, um die gewünschte Wirkung zu erzielen. Dies kann beispielsweise durch das Aufbringen eines definierten Drehmomentes an der Spanneinrichtung erfolgen. Zum Verspannen sind daher beispielsweise Drehmomentschlüssel oder andere Werkzeuge erforderlich. Solche Drehmomentschlüssel sind jedoch aus verschiedenen Gründen auf den Baustellen nicht sehr beliebt und es wird deshalb sehr oft darauf verzichtet, diese zu verwenden. Andererseits steht der effektiv erreichte Spannungszustand der Masse nicht in direktem Verhältnis mit dem aufgebrachten Drehmoment, da verschiedene Einflüsse wie z.B. Reibungsverluste, Temperatur etc. erhebliche Abweichungen bewirken können.

Aus der WO 02/086370 A1 ist daher eine Vorrichtung zur Erzeugung von Druckkräften bekannt, die einen mechanischen Indikator aufweist, der den Spannungszustand nach aussen hin anzeigt. Beispielsweise Fig. 12 dieser Schrift zeigt einen Indikator mit einem als Fühler dienenden, mit der Masse in Verbindung stehenden Kolben und einer als Sensor dienenden Tellerfeder. Der Kolben weist einen Schaft auf, der durch eine Öffnung des Gehäuses nach aussen geführt ist. Durch die Federcharakteristik der Tellerfeder überragt dieser Schaft je nach Verspannungszustand das Gehäuse mehr oder weniger nach aussen und zeigt somit den Verspannungszustand etwa proportional an. Der Fühler dient somit gleichzeitig auch der Anzeige des Verspannungszustandes. Aus konstruktiv bedingten Gründen ist der Aussendurchmesser des Schafts relativ gering und ergibt daher keine, auch auf Distanz deutliche erkennbare Anzeige.

Aus Fig. 13 derselben Veröffentlichung ist eine weitere Variante des offenbarten Indikators ersichtlich. Dabei steht ein stiftförmiger, axial verschiebbarer Bolzen mit seinem rückwärtigen Ende in Kontakt mit der verformbaren Masse. Der Bolzen übernimmt somit die Aufgabe des Fühlers. Das vordere Ende des Fühlers, bzw. Bolzens, steht in Verbindung mit einer Federmembran. Diese Federmembran weist zwei Endzustände auf. Im dargestellten Ausgangszustand ist die Federmembran spannungslos. Unter Krafteinwirkung durch den Bolzen schnappt die Federmembran über eine neutrale Lage vom stabilen Ausgangszustand in einen strichpunktiert dargestellten Verformungszustand. Dabei überragt ein Teil der Federmembran den Indikator nach aussen und zeigt dabei den Verspannungszustand an. Der Sensor dient somit gleichzeitig auch der Anzeige. Die Federmembran kann sowohl monostabil als auch bi-stabil, d.h. einen einzigen oder zwei stabile Endzustände aufweisen.

Bei beiden dieser Lösungen ist die Anzeige unter Umständen nur undeutlich oder gar nicht erkennbar.

Der Erfindung liegt daher die Aufgabe zugrunde, eine Vorrichtung zum Erzeugen von Druckkräften mit einem Indikator zur Anzeige des Spannungszustandes zu schaffen, der auch aus Distanz und ohne Hilfsmittel eine klare und eindeutige Erkennung des Verspannungszustandes ermöglicht.

Weiterhin ist es wünschenswert einen Indikator mit einem genauer definierten Schaltpunkt zu schaffen, der bereits nach geringem Betätigungsweg ausgelöst wird.

Gemäss der Erfindung wird dies dadurch erreicht, dass der Sensor mittels einer an der Vorrichtung vorgesehenen Einrichtung zum Vorspannen des Sensors auf einen definierten Wert vorspannbar ist.

Der Sensor verformt sich erst dann weiter, wenn die durch Spannungszustand von der Masse auf den Fühler, bzw. den Sensor ausgeübte Kraft die Vorspannkraft des Sensors überschreitet. Sodann springt er plötzlich in einen Zustand mit maximaler Verformung. Wenn bei einem Abbau der Verspannung der Druck in der Masse unter einen vorbestimmten Schwellenwert sinkt, kann der Sensor von selbst oder durch Betätigung von aussen wieder in seine ursprüngliche Ausgangsform zurück springen.

Durch die funktionelle Trennung der Elemente Fühler, Sensor und Anzeigeelement können alle drei Elemente für Ihren Zweck optimal ausgebildet und dimensioniert werden.

Eine zweckmässige Ausführung besteht darin, dass der Sensor tellerfederförmig ausgebildet ist. Tellerfedern sind sehr kompakt und ermöglichen relativ hohe Federkräfte bei geringem Federweg. Tellerfedern sind als handelsübliche Elemente in vielen verschiedene Abmessungen erhältlich und daher sehr preisgünstig und wirtschaftlich. Tellerfedern können auch gut vorgespannt werden.

Um die Federcharakteristik des Sensors zu beeinflussen, ist es vorteilhaft, dass der Sensor von der zentralen Öffnung ausgehende, radial verlaufende, sich bis gegen den äusseren Rand erstreckende Schlitze aufweist. Die Federkennlinie des Sensors kann somit beispielsweise mono-stabil oder bi-stabil sein.

Der Indikator ist vorteilhaft in einem kapselförmigen Indikatorgehäuse angeordnet. Der Indikator kann somit als komplette Baueinheit hergestellt und vormontiert werden. Je nach Anwendungszweck können auch bei unterschiedlichen Grenzwerten reagierende Indikatoren eingesetzt werden. Auch ein Austausch von schadhaften Indikatoren ist somit auf sehr einfache Weise und in kurzer Zeit möglich.

Zweckmässigerweise weist das Indikatorgehäuse ein in eine Öffnung des Gehäuses eingelassenes Basisteil und einen damit verbindbaren Deckel auf. Durch das Aufbringen des Deckels ist der Indikator nach aussen abgeschlossen und somit gegen ungewünschte Einflüsse von aussen, wie bspw. Verschmutzung, weitgehend geschützt.

Die Verbindung des Deckels mit dem Basisteil erfolgt vorteilhaft über einen Rastverschluss. Ein Rastverschluss ist sehr einfach und rasch montier- und auch wieder demontierbar. Das Montieren kann zudem ohne spezielle Werkzeuge erfolgen. Zum Demontieren genügt in der Regel ein einfaches Werkzeug, wie beispielsweise ein Schraubenzieher.

Eine weitere zweckmässige Lösung besteht darin, dass die Verbindung des Deckels mit dem Basisteil über ein Gewinde erfolgt. Eine Gewindeverbindung ermöglicht beispielsweise mit einem relativ geringen Kraftaufwand das Aufbringen einer hohen Vorspannkraft auf den Sensor. Bei geeigneter Ausbildung des Deckels, beispielsweise durch das Versehen mit einer Rändelung, ist das Auf- und Zuschrauben des Deckels auch ohne Werkzeuge, d.h. von Hand, möglich.

Das Anzeigeelement ist vorteilhaft mit dem Fühler lösbar verbunden. Das Anzeigeelement bewegt sich somit simultan mit dem Fühler. Diese Lösbarkeit ermöglicht auch eine einfache Montage, bzw. Verbindung des Sensors mit dem Fühler, bzw. mit dem Anzeigeelement.

Zweckmässigerweise erfolgt die Verbindung des Anzeigeelementes mit dem Fühler über einen zweiten Rastverschluss. Ein Rastverschluss ist einfach herstell- und montierbar. Bei Bedarf kann die Verbindung auch ohne Werkzeuge und grossen Aufwand wieder gelöst werden.

Eine weitere vorteilhafte Ausführung besteht darin, dass die Verbindung des Anzeigeelementes mit dem Fühler über ein Gewinde erfolgt. Gewindeverbindungen ermöglichen beispielsweise eine beliebige Einstellung der Relativ-Position zwischen dem Fühler und dem Sensor.

Es ist zweckmässig, dass der Fühler und das Anzeigeelement aus unterschiedlichen Werkstoffen bestehen. Für beide Teile können die dafür am besten geeigneten Werkstoffe verwendet werden.

Das Anzeigeelement besteht vorteilhaft aus Kunststoff. Kunststoffteile können in grossen Serien und daher sehr wirtschaftlich hergestellt werden. Sie sind ausserdem sehr widerstandsfähig und verschleissfest.

Es ist zweckmässig, dass das Anzeigeelement eine gegenüber dem Gehäuse auffällige Farbgebung aufweist. Diese Farbgebung kann beispielsweise bei Kunststoffteilen durch Einfärben des Werkstoffes erfolgen. Durch entsprechende Farben können Sensoren mit unterschiedlichen Grenzwerten von aussen deutlich erkennbar gemacht werden.

Der erfindungsgemässe Indikator kann bei sehr vielen verschiedenen Vorrichtungen zur Erzeugung von Druckkräften auf miteinander zu verbindende Bauteile für unterschiedliche Zwecke angewendet werden. Eine besonders vorteilhafte Anwendung besteht darin, dass die Vorrichtung als Rohrkupplung zum Verbinden glattendiger Rohre ausgebildet ist. Bei Rohrkupplungen kann die gummielastisch verformbare Masse beispielsweise aus einer Dichtmanschette bestehen. Für die einwandfreie Funktion der Rohrkupplung ist eine bestimmte Verspannung der Rohrkupplung erforderlich. Das Erreichen dieser Verspannung wird durch den erfindungsgemäss ausgebildeten Indikator optisch angezeigt.

Die Spanneinrichtung für eine solche Rohrkupplung besteht vorteilhafterweise im wesentlichen aus zwei achsparallel angeordneten Verschlussbolzen und wenigstens einer, diese quer dazu durchsetzenden Spannschraube. Die Verschlussbolzen sind beispielsweise in Spannlaschen des Gehäuses angeordnet und ermöglichen somit ein Verspannen des Gehäuses mit Hilfe der Spannschraube(n).

Die Erfindung soll nachstehend anhand der sie beispielsweise wiedergebenden Zeichnungen, näher erläutert werden.

Es zeigen:
- Fig. 1: Eine als Rohrkupplung ausgebildete Vorrichtung, teilweise im Längs- schnitt,
- Fig. 2: eine stirnseitige Ansicht der in Fig. 1 dargestellten Rohrkupplung
- Fig 3: einen vergrösserten Quer-(Aus-) schnitt durch die in Fig. 2 dargestellte Rohrkupplung im Bereich A, mit geöffnetem, spannungsfreien Indikator,
- Fig. 4: einen Querschnitt entsprechend Fig. 3 mit geschlossenem Indikator, wo- bei die Rohrkupplung unverspannt ist und der Sensor des Indikators unter Vorspannung steht,
- Fig. 5: eine Querschnitt entsprechend Fig. 3 und 4, wobei die Rohrkupplung ver- spannt und der Indikator ausgelöst ist.
- Fig. 6: einen als geschlitzte Tellerfeder ausgebildeten Sensor, in der Draufsicht,
- Fig. 7: eine Seitenansicht des in Fig. 6 gezeigten Sensors und
- Fig. 8: ein Federdiagramm eines als Tellerfeder ausgebildeten Sensors.

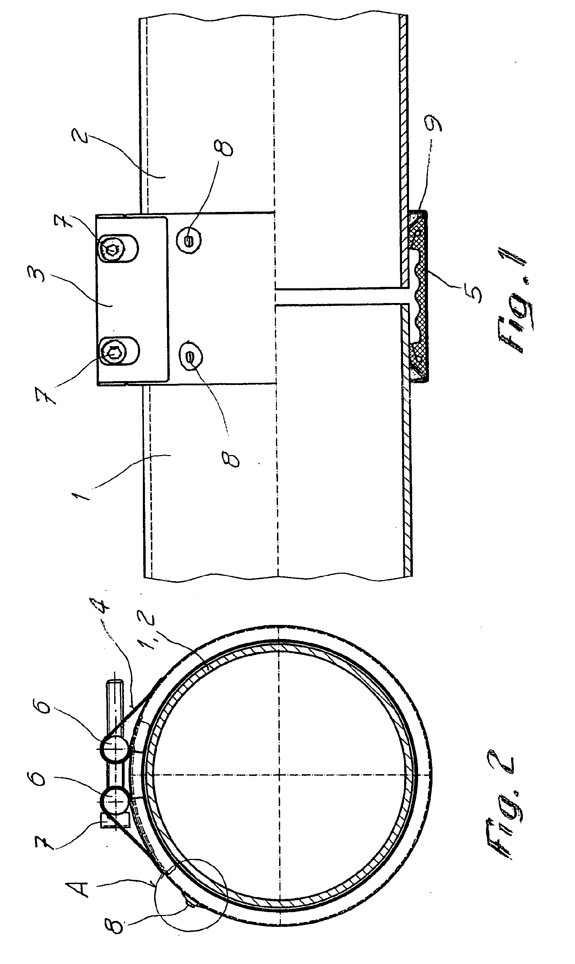

Aus Fig. 1 und 2 ist eine axial zugfeste Rohrkupplung zum Verbinden von zwei glattendigen, zylindrischen Rohren 1, 2 ersichtlich. Die Rohrkupplung weist ein Gehäuse 3 auf, das mit Laschen 4 zum Verspannen der Rohrkupplung versehen ist. Im Gehäuse 3 ist eine Dichtmanschette 5 aus einem gummielastischen Werkstoff angeordnet. In die Laschen 4 sind Verschlussbolzen 6 eingesetzt. Zwei Spannschrauben 7 durchsetzen die Verschlussbolzen 6 quer zu diesen und dienen zum Verspannen der Rohrkupplung. Am Gehäuse 3 sind zwei Indikatoren 8 angeordnet. Diese dienen zur optischen Anzeige des Verspannungszustandes.

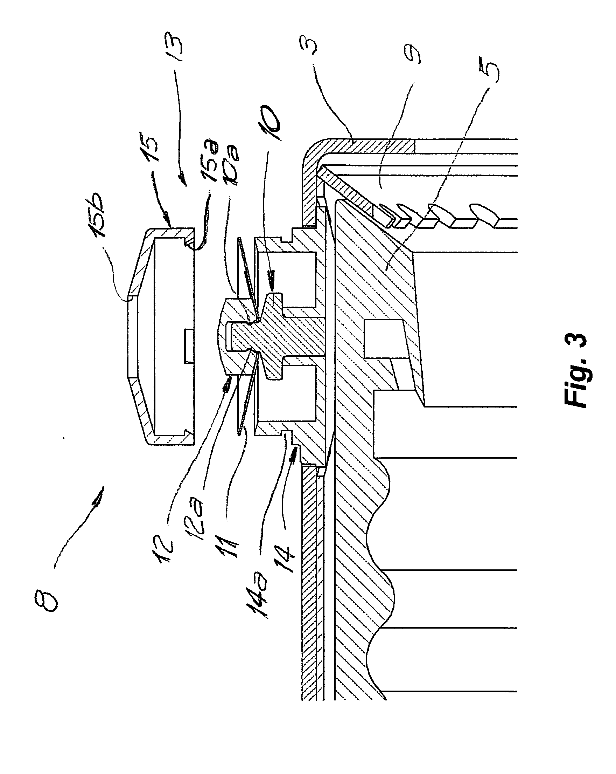

Fig. 3 bis 5 zeigen den Indikator 8 im Querschnitt und in vergrössertem Massstab. Der Indikator weist einen Fühler 10, einen Sensor 11 und ein Anzeigeelement 12 auf. Das Anzeigelement 12 ist mit dem Fühler 10 über einen Rastverschluss lösbar verbunden. Zu diesem Zweck ist der Fühler 10 mit einer Ringnut 10a und das Anzeigeelement 12 mit einem darin einrastbaren Ringwulst 12a versehen.

Wie insbesondere Fig. 3 zeigt, ist der tellerförmig ausgebildete Sensor 11 durch den Rastverschluss zwischen dem Fühler 10 und dem Anzeigeelement 12 unverschieblich verbunden. Der Fühler 10, der Sensor 11 und das Anzeigeelement 12 bilden somit funktionell eine Einheit. Diese drei Elemente sind in einem kapselförmigen Indikatorgehäuse 13 angeordnet. Das Indikatorgehäuse 8 besteht aus einem Basisteil 14 und einem damit lösbar verbundenen Deckel15. Die Verbindung zwischen dem Basisteil 14 und dem Deckel 15 erfolgt ebenfalls mittels eines Rastverschlusses. Zu diesem Zweck ist der Deckel 15 mit Nocken 15a und das Basisteil 14 mit einer Ringnut 14a versehen, die beim Verrasten formschlüssig ineinander eingreifen. Der Deckel 15 ist ferner mit einer Durchtrittsöffnung 15b für das Anzeigeelement 12 versehen.

In Fig. 3 ist der Indikator 8 in teilweise demontiertem Zustand ersichtlich. Dabei ist der Deckel 15 vom Basisteil 14 entfernt. Die aus den drei Elementen Fühler 10, Sensor 11 und Anzeigeelement 12 bestehende, funktionelle Einheit ist im Basisteil 14 verschiebbar gelagert. Der als Tellerfeder ausgebildete Sensor 11 ist dabei in spannungsfreiem Zustand.

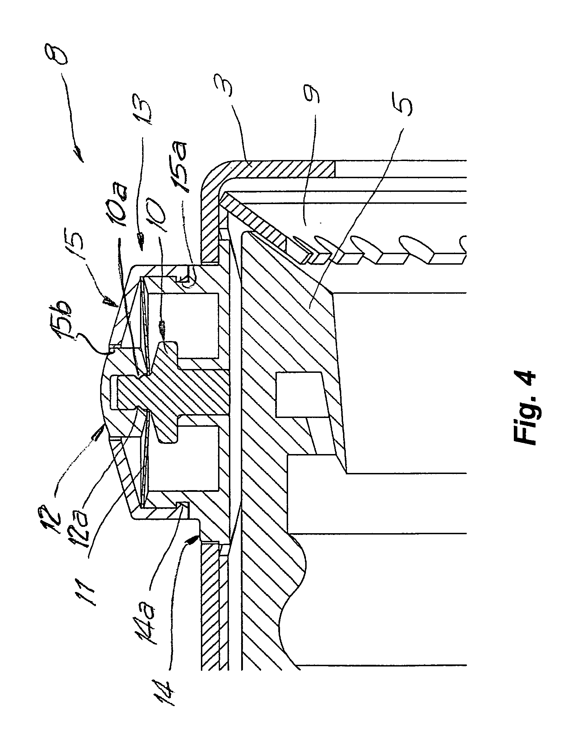

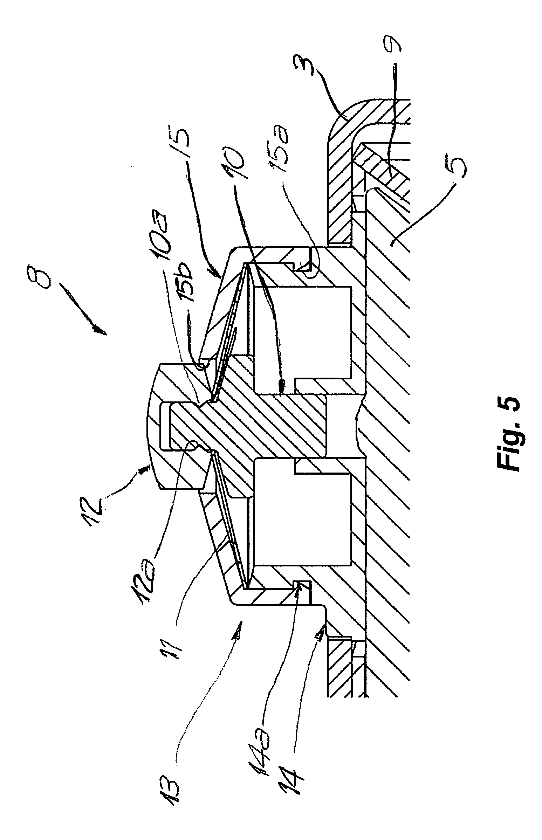

In Fig. 4 ist der Deckel 15 des Indikatorgehäuses 13 mit dem Basisteil 14 verrastet. Durch die dabei entstehende Verformung wird der Sensor 11 auf einen definierten Wert vorgespannt. Der Sensor 11 ist in diesem Zustand annähernd flach. Der Fühler 10 muss daher nur einen sehr geringen Weg zurücklegen, bis der Sensor 11 aus der in Fig. 3 gezeigten, stabilen Ausgangsform in die dazu etwa spiegelbildliche Form gemäss Fig. 5 springt.

Fig. 5 zeigt den Sensor 8 in verspanntem Zustand. Durch die Masse 5 ist dabei Druck auf den Fühler 10 ausgeübt worden. Sobald dieser Druck einen vorbestimmten Wert überschreitet, ändert der Sensor 11 plötzlich seine Form und geht in die dargestellte, instabile bzw. stabile Form über. Dabei tritt das Anzeigeelement 12 deutlich über den Deckel 15 hervor. Wenn der Druck in der Masse, bzw. der Dichtmanschette 5 abnimmt, geht der Sensor 11 und somit auch der Fühler 10 und das Anzeigeelement plötzlich wieder in die aus Fig. 4 ersichtliche Ausgangslage zurück, bzw. kann durch Drücken auf das Anzeigeelement 12 zurückgestellt werden.

Um die Erkennbarkeit des Indikators noch zu verbessern kann das Anzeigeelement 12 beispielsweise mit einer auffälligen, sich vom Mantel des Gehäuses 3 deutlich abhebenden Farbgebung versehen sein. Dies ist insbesondere dann sehr gut durchführbar, wenn das Anzeigeelement aus Kunststoff besteht.

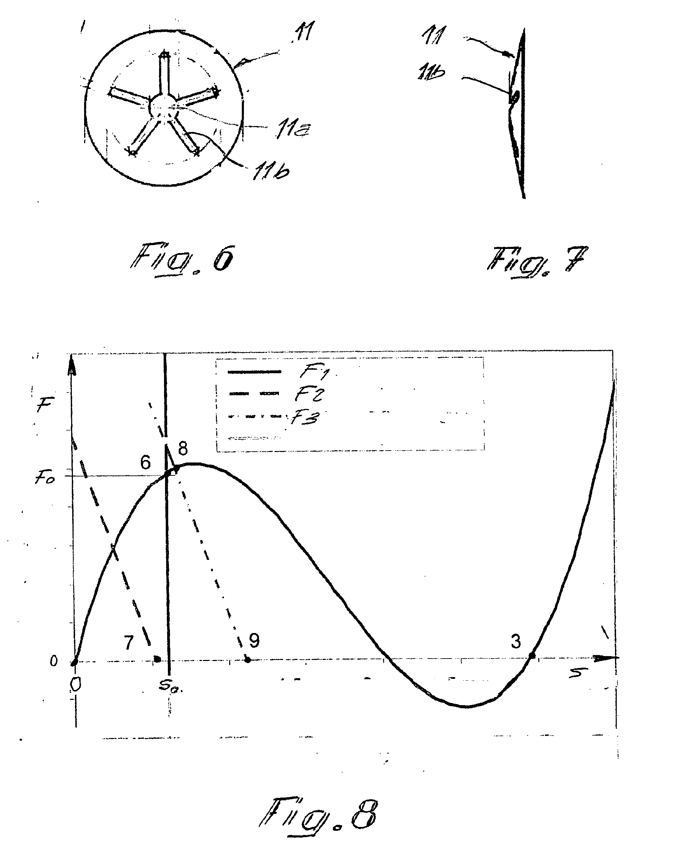

Der aus Fig. 6 und 7 ersichtliche, als geschlitzte Tellerfeder ausgebildete Sensor 11 weist von seiner zentralen Öffnung 11a ausgehende, radial gegen den Rand verlaufende Schlitze 11b auf. Durch die Länge und Breite der Schlitze 11b können die Federkennlinie des Sensors 11 wesentlich beeinflusst werden. So kann beispielsweise eine mono-stabile oder bi-stabile Charakteristik erreicht werden, bzw. der Schaltweg des Indikators wesentlich vergrössert werden.

Fig. 8 zeigt die etwa sinusförmig verlaufende Federkennlinie F1 des in Fig. 6 und 7 dargestellten, tellerförmig ausgebildeten Sensors 11 in einem Kraft/Weg-(F/s)-Diagramm. Beim Einbau des Sensors 11 in die Kapsel des Indikators wird der Sensor 11 um den Weg Sₒ zusammengedrückt. Dabei entsteht die Vorspannkraft Fₒ. Dieser Zustand wird im Punkt 6 des Diagramms erreicht. Die degressiv verlaufenden Linien F2 und F3 zeigen die Spannung der gummielastischen Masse in losem (F2) und verspanntem (F3) Zustand der Rohrkupplung. D.h. beim Verspannen der Kupplung wird die Linie F2 parallel nach rechts geschoben und gelangt schliesslich in den Verlauf gemäss F3. Im Punkt 8 sind die Kräfte der Tellerfeder und der gummielastischen Masse im Gleichgewicht. Bei geringfügiger Erhöhung der Verspannung schnappt die Tellerfeder über die maximale Kraft hinaus und gelangt zum Punkt 3. Bei einer bi-stabilen Tellerfeder ist dieser Vorgang jedoch nicht automatisch reversibel, d.h. die Tellerfeder muss, bzw. kann von aussen über das Anzeigeelement 12 in ihre Ausgangslage zurückgedrückt werden.

### Bezugszeichenliste

- 1: Rohr
- 2: Rohr
- 3: Gehäuse
- 4: Lasche
- 5: Dichtmanschette (Masse)
- 6: Verschlussbolzen
- 7: Spannschraube
- 8: Indikator
- 9: Verankerungsring
- 10: Fühler
- 10a: Ringnut
- 11: Sensor
- 11a: Öffnung
- 11b: Schlitz
- 12: Anzeigeelement
- 12a: Ringwulst
- 13: Indikatorgehäuse
- 14: Basisteil
- 14a: Ringnut
- 15: Deckel
- 15a: Nocken
- 15b: Durchtrittsöffnung

## Patentansprüche

1. Vorrichtung zum Erzeugen von Druckkräften auf miteinander zu verbindende, rohrförmige Bauteile, mit einem Gehäuse (3), einer mechanisch betätigbaren Spanneinrichtung, einer im Gehäuse (3) angeordneten, gummielastisch verformbaren Masse (5), welche mittels der Spanneinrichtung unter Druck setzbar ist, und einem mechanischen Indikator (8), der den Spannungszustand der Masse (5) nach aussen hin optisch anzeigt, mit einem mit der Masse (5) in Kontakt stehenden Fühler (10) und einem Sensor (11), wobei der Indikator (8) ein mit dem Fühler (10), bzw. dem Sensor (11) in Kontakt stehendes, separates Anzeigeelement (12) aufweist, **dadurch gekennzeichnet, dass** der Sensor (11) mittels einer an der Vorrichtung vorgesehenen Einrichtung (15) zum Vorspannen des Sensors (11) auf einen definierten Wert vorspannbar ist.

2. Vorrichtung nach Anspruch 1, **dadurch gekennzeichnet, dass** der Sensor (11) tellerfederförmig ausgebildet ist.

3. Vorrichtung nach Anspruch 2, **dadurch gekennzeichnet, dass** der Sensor (11) von der zentralen Öffnung (11a) ausgehende, radial verlaufende, sich bis gegen den äusseren Rand erstreckende Schlitze (11b) aufweist.

4. Vorrichtung nach einem der vorhergehenden Ansprüche, **dadurch gekennzeichnet, dass** der Indikator (8) in einem kapselförmigen Indikatorgehäuse (13) angeordnet ist.

5. Vorrichtung nach Anspruch 4, **dadurch gekennzeichnet, dass** das Indikatorgehäuse ein in eine Öffnung des Gehäuses (3) eingelassenes Basisteil (14) und einen damit verbindbaren Deckel (15) aufweist.

6. Vorrichtung nach Anspruch 5, **dadurch gekennzeichnet, dass** die Verbindung des Deckels (15) mit dem Basisteil (14) als Rastverschluss (14a, 15a) ausgebildet ist.

7. Vorrichtung nach Anspruch 5, **dadurch gekennzeichnet, dass** die Verbindung des Deckels (15) mit dem Basisteil (14) als Gewinde ausgebildet ist.

8. Vorrichtung nach einem der vorhergehenden Ansprüche, **dadurch gekennzeichnet, dass** das Anzeigeelement (12) mit dem Fühler (10) lösbar verbunden ist.

9. Vorrichtung nach Anspruch 8, **dadurch gekennzeichnet, dass** die Verbindung des Anzeigeelementes (12) mit dem Fühler (10) über einen Rastverschluss (10a, 12a) erfolgt.

10. Vorrichtung nach Anspruch 8, **dadurch gekennzeichnet, dass** die Verbindung des Anzeigeelementes (12) mit dem Fühler (10) über ein Gewinde erfolgt.

11. Vorrichtung nach einem der vorhergehenden Ansprüche, **dadurch gekennzeichnet, dass** der Fühler (10) und das Anzeigeelement (12) aus unterschiedlichen Werkstoffen bestehen.

12. Vorrichtung nach Anspruch 11, **dadurch gekennzeichnet, dass** das Anzeigeelement (12) aus Kunststoff besteht.

13. Vorrichtung nach Anspruch 11 oder 12, **dadurch gekennzeichnet, dass** das Anzeigeelement (12) eine gegenüber dem Gehäuse (3) auffällige Farbgebung aufweist.

14. Vorrichtung nach einem der vorhergehenden Ansprüche, **dadurch gekennzeichnet, dass** die Vorrichtung als Rohrkupplung zum Verbinden glattendiger Rohre (1, 2) ausgebildet ist

15. Vorrichtung nach Anspruch 14, **dadurch gekennzeichnet, dass** die Spanneinrichtung im wesentlichen aus zweiachsparallel angeordneten Verschlussbolzen (6) und wenigstens einer, diese quer dazu durchsetzenden Spannschraube (7) besteht.

## Claims

1. A device for generating pressure forces on tubular components to be connected to one another, having a housing (3), a mechanically actuatable tensioning apparatus, a rubber-elastically deformable compound (5) which is arranged in the housing (3) and can be pressurized by the tensioning apparatus, and a mechanical indicator (8) which optically displays the tensioning state of the compound (5) to the outside, having a probe (10) which is in contact with the compound (5) and a sensor (11), wherein the indicator (8) has a separate display element (12) which is in contact with the probe (10) or the sensor (11), **characterized in that** the sensor (11) can be pretensioned to a defined value by means of an apparatus (15) for pre-tensioning the sensor (11), which apparatus is provided on said device.

2. The device according to claim 1, **characterized in that** the sensor (11) is shaped like a disk spring.

3. The device according to claim 2, **characterized in that** the sensor (11) has slots (11b) which extend from the central opening (11a) and run radially extending towards the outer edge.

4. The device according to any one of the preceding claims, **characterized in that** the indicator (8) is arranged within a capsular indicator housing (13).

5. The device according to claim 4, **characterized in that** the indicator housing has a base part (14) embedded into an opening of the housing (3) and a cover (15) which can be connected to said base part.

6. The device according to claim 5, **characterized in that** the connection of the cover (15) with the base part (14) is formed as detent closure (14a, 15a).

7. The device according to claim 5, **characterized in that** the connection of the cover (15) with the base part (14) is formed as thread.

8. The device according to any one of the preceding claims, **characterized in that** the display element (12) is detachably connected to the probe (10).

9. The device according to claim 8, **characterized in that** the connection of the display element (12) with the probe (10) takes place via a detent closure (10a, 12a).

10. The device according to claim 8, **characterized in that** the connection of the display element (12) with the probe (10) takes place via a thread.

11. The device according to any one of the preceding claims, **characterized in that** the probe (10) and the display element (12) consist of different materials.

12. The device according to claim 11, **characterized in that** the display element (12) consists of plastic.

13. The device according to claim 11 or claim 12, **characterized in that** the display element (12) has a coloring which is striking with respect to the housing (3).

14. The device according to any one of the preceding claims, **characterized in that** the device is formed as pipe coupling for connecting smooth-ended pipes (1, 2).

15. The device according to claim 14, **characterized in that** the tensioning device consists substantially of two locking pins (6) arranged axially parallel to one another and at least one tensioning screw (7) transversely penetrating said locking pins.

## Revendications

1. Dispositif destiné à produire des forces de compression sur des pièces tubulaires à relier les unes aux autres, comprenant un boîtier (3), un dispositif de serrage actionnable mécaniquement, une masse (5) déformable et élastique de type caoutchouc placée dans le boîtier (3) qui peut mise sous pression au moyen du dispositif de serrage, et un indicateur mécanique (8) qui indique visuellement à l'extérieur l'état de serrage de la masse (5), comprenant une sonde (10) en contact avec la masse (5) et un capteur (11), sachant que l'indicateur (8) présente un élément d'affichage (12) séparé en contact avec la sonde (10) respectivement le capteur (11), **caractérisé en ce que** le capteur (11) peut être précontraint à une valeur définie au moyen d'un dispositif (15) pour précontraindre le capteur (11) prévu sur le dispositif.

2. Dispositif selon la revendication 2, **caractérisé en ce que** le capteur (11) est formé comme une rondelle-ressort.

3. Dispositif selon la revendication 2, **caractérisé en ce que** le capteur (11) présente des fentes (11b) partant de l'ouverture centrale (11a), au tracé radial et s'étendant jusque contre le bord extérieur.

4. Dispositif selon l'une des revendications précédentes, **caractérisé en ce que** l'indicateur (8) est disposé dans un boitier d'indicateur (13) en forme de capsule.

5. Dispositif selon la revendication 4, **caractérisé en ce que** le boîtier d'indicateur (13) présente une pièce de base (14) entrée dans une ouverture du boîtier (3) et un couvercle (15) qui peut être relié à celle-ci.

6. Dispositif selon la revendication 5, **caractérisé en ce que** la liaison du couvercle (15) avec la pièce de base (14) est formée comme une fermeture par encliquetage (14a, 15a).

7. Dispositif selon la revendication 5, **caractérisé en ce que** la liaison du couvercle (15) avec la pièce de base (14) est formée comme un filetage.

8. Dispositif selon l'une des revendications précédentes, **caractérisé en ce que** l'élément d'affichage (12) est relié de manière amovible à la sonde (10).

9. Dispositif selon la revendication 8, **caractérisé en ce que** la liaison de l'élément d'affichage (12) à la sonde (10) s'effectue par une fermeture par encliquetage (10a, 12a).

10. Dispositif selon la revendication 8, **caractérisé en ce que** la liaison de l'élément d'affichage (12) à la sonde (10) s'effectue par un filetage.

11. Dispositif selon l'une des revendications précédentes, **caractérisé en ce que** la sonde (10) et l'élément d'affichage (12) sont fabriqués dans des matériaux différents.

12. Dispositif selon la revendication 11, **caractérisé en ce que** l'élément d'affichage (12) est en plastique.

13. Dispositif selon la revendication 11 ou 12, **caractérisé en ce que** l'élément d'affichage (12) présente une coloration nettement visible par rapport au boitier (3).

14. Dispositif selon l'une des revendications précédentes, **caractérisé en ce que** le dispositif est formé comme un couplage tubulaire pour relier des tubes à extrémité lisse (1, 2).

15. Dispositif selon la revendication 14, **caractérisé en ce que** le dispositif de serrage est composé essentiellement de boulons obturateurs placés sur deux axes parallèles (6) et au moins d'une vis de serrage (7) traversant ceux-ci transversalement.
